# EUROPEAN PATENT SPECIFICATION

(11) **EP 1 361 094 B1**
(45) Date of publication and mention of the grant of the patent: **09.03.2005**
(21) Application number: 03008424.8
(22) Date of filing: 11.04.2003
(51) Int. Cl.: B60J 3/02

(54) **A sun shade for vehicles**
Sonnenblende für Fahrzeuge
Pare-soleil pour véhicules

(30) Priority: 07.05.2002 IT TO20020373
(43) Date of publication of application: 12.11.2003
(73) Proprietor: Saturno S.p.A, 10095 Grugliasco, Torino (IT)
(72) Inventor: Russo, Gianni, c/o Saturno Spa, 10195 Grugliasco (Torino) (IT)
(74) Representative: Marchitelli, Mauro

(56) References cited:
- EP-A- 0 745 498
- DE-A- 3 812 679
- DE-C- 10 042 657

## Description

The present invention relates to a sun shade for vehicles, which has the characteristics recalled in the preamble of Claim 1.

Traditionally, sun shades for vehicles comprise a body with a generally quadrangular shape connected to the vehicle so as to be able to undergo displacement between an inoperative raised position and an operative lowered position. The body of the sun shade has two parallel faces, the first one of which faces the roof of the vehicle and the second one of which faces the passenger compartment of the vehicle when the body is in the aforesaid raised position. Some sun shades, in particular those designed for being mounted on the passenger side of the vehicle, are provided with a mirror set on the aforesaid first face. Said mirror is oriented towards the face of the user when the body of the sun shade is in a position approximately intermediate between the completely raised position and the completely lowered position against the window of the vehicle. In order to enable the user to use the mirror also in conditions of poor illumination, it is known to employ lighting means set inside the body so as to light up the active surface of the mirror.

There has already been suggested the idea of using illuminating means integrated in the sun shade for the purpose of lighting up the passenger compartment of the vehicle, in addition to or instead of the traditional ceiling lights fixed to the roof of the vehicle generally in a central position between the driver's seat and the front passenger's seat.

The document US5011212 describes a sun shade provided with a supporting structure for fixing it to the vehicle. The supporting body comprises a base having an elongated shape, which carries the means for articulated connection of the body of the sun shade. The supporting structure is moreover provided with lighting means including a lighting window and a reading light.

The document FR2504871 describes a sun shade for vehicles in which, on the face that faces the roof of the vehicle when the body of the sun shade is in the inoperative raised position there is provided a transparent surface through which light coming from a light source housed inside the body of the sun shade is emitted. The transparent surface replaces the traditional courtesy mirror in particular on sun shades designed for being used on the driver's side of the vehicle. The sun shade described in this document can be used for lighting up the passenger compartment of the vehicle when the body of the sun shade is in a partially or completely lowered position.

The document DE10042657, on which the preamble of Claim 1 is based, describes a sun shade for vehicles having two separate panels, one of which is provided with an internal light source designed for emitting light through a transparent surface set on the face of the panel that faces the passenger compartment when the panel is in a raised position.

The purpose of the present invention is to provide a sun shade that can illuminate both the passenger compartment of the vehicle and a courtesy mirror, in a simpler and more functional way.

According to the present invention, said purpose is achieved by a sun shade having the characteristics forming the subject of the main claim.

The present invention will now be described in detail with reference to the attached drawings, provided purely by way of non-limiting example, in which:
- Figure 1 is a front elevation of a first face of a sun shade according to the present invention;
- Figure 2 is a front elevation of a second face of the sun shade illustrated in Figure 1;
- Figure 3 is a schematic cross section taken according to the line III-III of Figure 2;
- Figure 4 is a cross section at a larger scale taken according to the line IV-IV of Figure 3;
- Figure 5 is a cross-sectional and exploded view of the part illustrated in Figure 4;
- Figure 6 is a schematic view illustrating a sun shade according to the present invention mounted on a vehicle;
- Figure 7 is a view of the part indicated by the arrow VII in Figure 2;
- Figure 8 is a schematic cross-sectional view according to the line VIII-VIII of Figure 2;
- Figure 9 is a schematic cross-sectional view illustrating a variant of the present invention; and
- Figure 10 is a schematic view illustrating a preferred embodiment of an electrical circuit for suppling of the lighting source of the sun shade according to the invention.

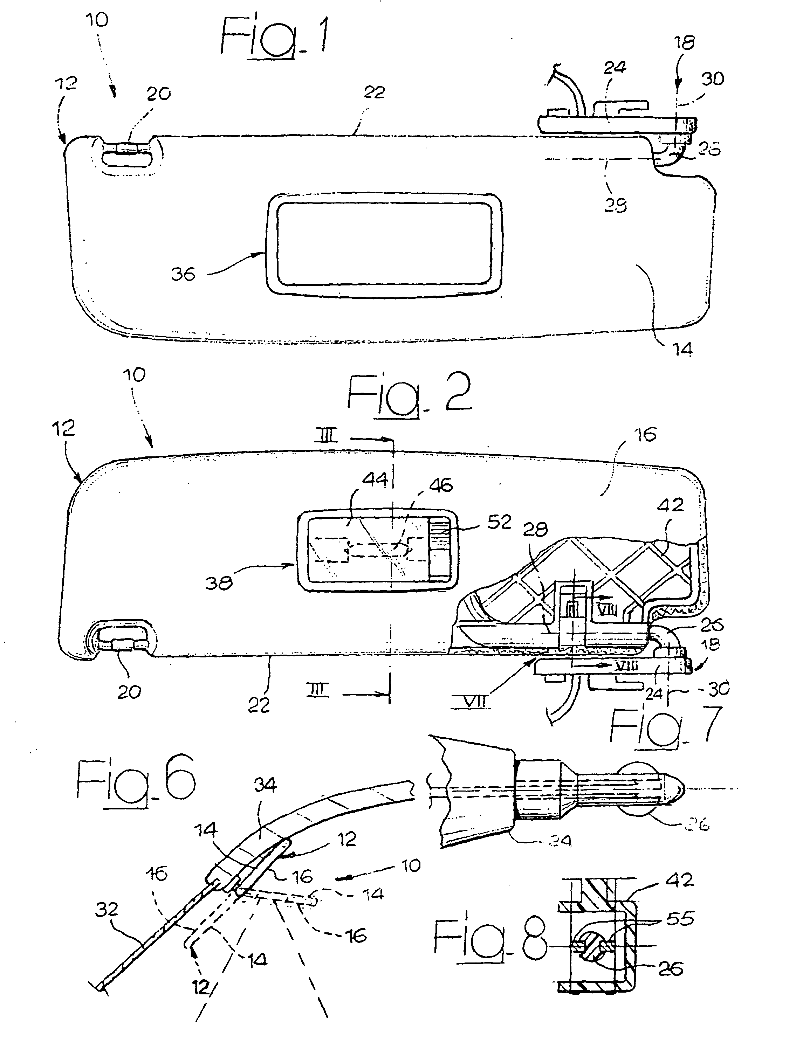

With reference to Figures 1 and 2, the reference number 10 designates a sun shade for vehicles, which comprises a body 12 of a generically quadrangular shape having two opposite faces 14, 16, set parallel with respect to one another. The sun shade 10 comprises connection means 18, 20, which are in themselves known, for connection of the body 12 to a vehicle in an articulated way about an axis parallel to a side 22 of the body 12. The connection means comprise a pin 20, which is designed for engaging, in such a way that it can turn, a hook (not illustrated) fixed to the vehicle and a joint 18 having a base 24 designed for being fixed to the vehicle and carrying a substantially L-shaped pin 26. The body 12 of the sun shade 10 is mounted so that it can turn with respect to the pin 26 about an axis designated by 28, and the pin 26 is preferably mounted so that it can turn with respect to the base 24 about an axis 30 orthogonal to the axis 28.

Figure 6 is a schematic illustration of the sun shade 10 mounted on a vehicle having a front window 32 and a roof 34. In a way altogether usual, the body 12 of the sun shade 10 can assume a raised position, illustrated in Figure 6 by a solid line, and a completely lowered position, illustrated in Figure 6 with a dashed line, in which the body of the sun shade 12 covers a top part of the window 32. Figure 6 also illustrates a generic partially lowered intermediate position between the completely raised position and the completely lowered position. In the completely raised position, the face 14 of the body 12 faces the roof of the vehicle and the face 16 faces the passenger compartment. In a known way, the body of the sun shade 12 is provided with elastic means consisting, for example, of a flat spring (not illustrated), which cooperates with the pin 26 for defining positions of stable retention corresponding to the completely raised position and to the completely lowered position.

On the face 14 of the body 12 (i.e., the one facing the roof of the vehicle in the raised position of the body 12), the body 12 can be provided with a courtesy mirror 36, which is visible by the user when the body 12 is in the lowered position. The courtesy mirror 36 can be provided with a cover, which can slide parallel to the plane of the mirror or else be articulated thereto and can be associated to lighting means that illuminate the active surface of the mirror.

Alternatively or in addition to the courtesy mirror 36, the surface 14 of the body 12 can be provided with an adherent pocket designed, for example, for containing the tickets for the motorway toll, in particular in the case of a sun shade designed for being mounted on the driver's side of the vehicle.

According to the present invention, lighting means, designated as a whole by 38, for illuminating the passenger compartment of the vehicle are provided on the face 16 of the body 12 that faces the passenger compartment of the vehicle, in the raised position of the body 12. The lighting means 38 can be made so as to produce a diffused illumination of the passenger compartment or else a concentrated illumination, such as a light that emits a beam on a reading area for the driver or else for the passenger.

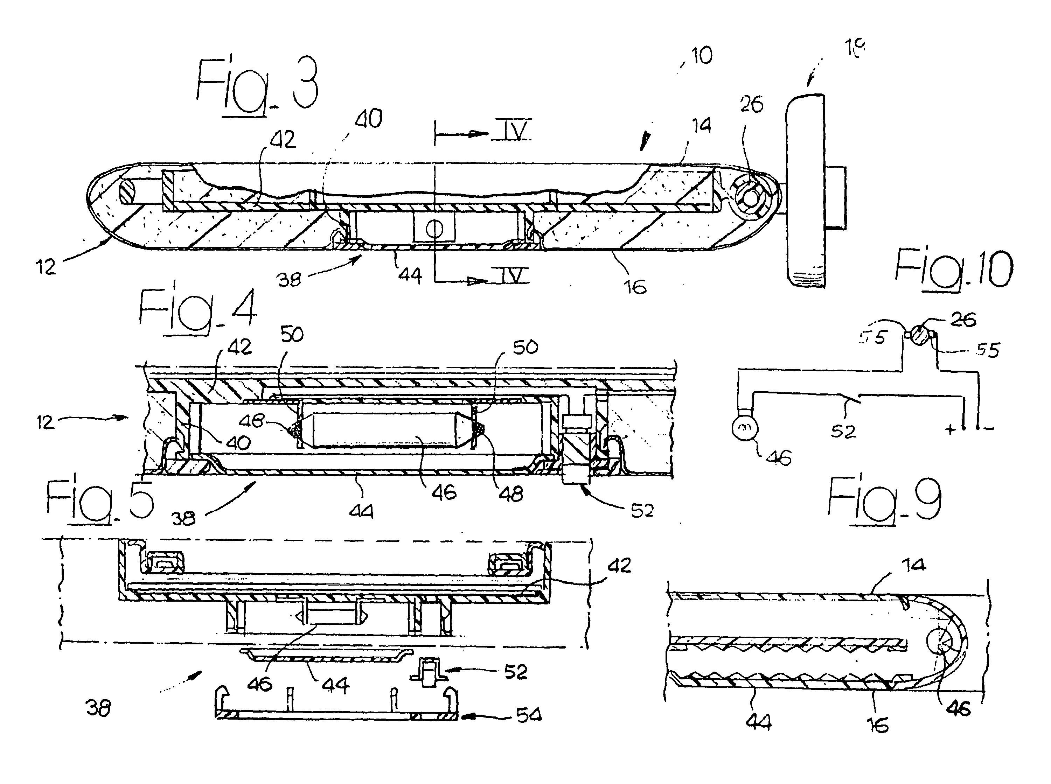

As is schematically illustrated in Figures 3 to 5, the lighting means 38 are integrated in the body 12 and have a shell 40 preferably made integrally with a supporting structure 42 of the body 12, the said supporting structure being made of injection-moulded plastic material, for example of a reticular shape. The shell 40 is closed by a surface 44 that is transparent to light and is set substantially flush to the outer surface of the face 16. A light source 46 supplied by electric current is housed in the shell 40 and is set so as to emit light radiation towards the outside of the body 12 through the transparent cover 44. In the example illustrated purely by way of example in Figures 3 to 5, the light source 46 is an electric lamp of elongated shape with conductive ends 48 connected electrically to a pair of plate terminals 50 that also perform the function of supporting the lamp 46. Alternatively, the lamp 46 could be constituted by any other source of light radiation, such as for example a light-emitting diode or the like.

According to a possible embodiment of the invention, the body 12 also comprises an electric switch 52 for controlling switching-on and switching-off of the light source 46. The switch 52 can be mounted in the vicinity of the transparent surface 44. As schematically illustrated in Figure 5, there can be provided a frame made of plastic material 54, which is mounted by snap action on the body 12 and which connects to the body 12 both the transparent surface 44 and the switch 52. It is understood in any case that the transparent surface 44 and the switch 52, if present, can be fixed to the body 12 in any other way. The switch for controlling the light source 46 could also be set on the outside of the body 12.

Figure 10 is a schematic illustration of the electrical circuit for controlling the lighting source 46. In addition to the switch for switching on and switching off 52, there could be provided a second electric control switch, schematically represented by 55, associated to the pin 26 and set so as to interrupt the electrical supply of the light source 46 when the body 12 is in the completely lowered position. This is a safety function that prevents emission of light directly against the front window 32, to prevent light reflected by the front window 32 from possibly impairing the conditions of visibility of the driver of the vehicle. In Figure 8 schematically designated by 55 are electrical contacts co-operating with the pin 26, the said contacts forming the second switch.

Figure 9 illustrates a variant of the present invention, in which a single light source 46 is provided for performing the function of illumination of the passenger compartment and illumination of the courtesy mirror. In this variant the lighting source 46 is set so as to direct the flow of light both towards the transparent surface 44 and towards the face 14 carrying the courtesy mirror.

The lighting means 38 integrated in the sun shade 12 can be used in addition to or in substitution of the lighting means of the passenger compartment, which are traditionally fixed to the roof of the vehicle. The driver or the passenger can switch on the lighting means 38 without having previously to lower the body of the sun shade. The arrangement of the lighting means 38 on the face 16 of the body 12 is particularly advantageous also because, as illustrated schematically in Figure 6, by varying the inclination of the body 12 about its axis of articulation, it is possible to vary the orientation of the beam of light emitted by the lighting means 38.

Of course, without prejudice to the principle of the invention, the details of construction and the embodiments may vary amply with respect to what is described and illustrated herein purely by way of example, without thereby departing from the scope of the present invention, as defined by the ensuing claims.

## Claims

1. A sun shade for vehicles, comprising a body (12) provided with connection means (18, 20) that enable a movement of the body (12) between an inoperative raised position and an operative lowered position, the body having two parallel faces (14, 16), the first one of which (14) faces the roof of the vehicle and the second one of which (16) faces the passenger compartment of the vehicle when the body is in said raised position, in which a light source (46) is set inside the body (12) and is designed for emitting light through a transparent surface (44) set on said second face (16), the sun shade being **characterized in that** it comprises a courtesy mirror (36) set on said first face (14) of the body (12) and **in that** said light source (46) is set so as to light up also said courtesy mirror (36).

2. The sun shade according to Claim 1, **characterized in that** the body (12) comprises a switch (52) for switching on and switching off said light source (46).

3. The sun shade according to Claim 2, **characterized in that** it comprises electrical-control means designed for interrupting the electrical supply of the light source (46) when the body (12) is in said lowered position.

## Patentansprüche

1. Sonnenblende für Fahrzeuge mit einem Körper (12), der mit einer Verbindungseinrichtung (18, 20) ausgestattet ist, die eine Bewegung des Körpers (12) zwischen einer nicht wirksamen angehobenen Position und einer wirksamen abgesenkten Position erlaubt, welcher Körper zwei parallele Seiten (14, 16) aufweist, von denen in der angehobenen Position des Körpers die erste (14) dem Fahrzeugdach und die zweite (16) dem Fahrgastraum des Fahrzeugs zugewandt ist, wobei in dem Körper (12) eine Lichtquelle (46) angeordnet ist und dazu ausgelegt ist, Licht durch eine an der zweiten Seite (16) angeordnete transparente Oberfläche (44) auszustrahlen, und die Sonnenblende **dadurch gekennzeichnet ist, dass** sie einen an der ersten Seite (14) des Körpers (12) angeordneten Sonnenblendenspiegel (36) aufweist und dass die Lichtquelle (46) so ausgelegt ist, dass sie auch den Sonnenblendenspiegel (36) beleuchtet.

2. Sonnenblende nach Anspruch 1, **dadurch gekennzeichnet, dass** der Körper (12) einen Schalter (52) zum Ein- und Ausschalten der Lichtquelle (46) aufweist.

3. Sonnenblende nach Anspruch 2, **dadurch gekennzeichnet, dass** sie eine elektrische Steuereinrichtung aufweist, die dazu ausgelegt ist, die elektrische Versorgung der Lichtquelle (46) zu unterbrechen, wenn der Körper (12) in der abgesenkten Position ist.

## Revendications

1. Pare-soleil pour véhicules, comprenant un corps (12) équipé de moyens de liaison (18, 20) qui permettent un mouvement du corps (12) entre une position relevée inactive et une position abaissée active, le corps présentant deux faces parallèles (14, 16), dont la première (14) fait face au toit du véhicule et dont la deuxième (16) fait face à l'habitacle du véhicule lorsque le corps se trouve dans la position relevée, dans lequel un source lumineuse (46) est montée à l'intérieur du corps (12) et est conçue pour émettre de la lumière à travers une surface transparente (44) montée sur la deuxième face (16), le pare-soleil étant **caractérisé en ce qu'**il comprend un miroir de courtoisie (36) monté sur la première face (14) du corps (12) et **en ce que** la source lumineuse (46) est montée de telle sorte qu'elle éclaire également le miroir de courtoisie (36).

2. Pare-soleil selon la revendication 1, **caractérisé en ce que** le corps (12) comprend un interrupteur (52) pour allumer et éteindre la source lumineuse (46).

3. Pare-soleil selon la revendication 2, **caractérisé en ce qu'**il comprend des moyens de commande électrique conçus pour interrompre l'alimentation électrique de la source lumineuse (46) lorsque le corps (12) se trouve en position abaissée.
